# EUROPÄISCHE PATENTANMELDUNG

(11) **EP 4 450 249 A1**
(43) Veröffentlichungstag der Anmeldung: **23.10.2024**
(21) Anmeldenummer: 23168183.4
(22) Anmeldetag: 17.04.2023
(51) Int. Cl.: B29C 45/14, F16B 37/12, B29K 705/00, B29L 1/00

(54) **SPRITZGUSSBAUTEIL MIT GEWINDEEINSATZ UND VERFAHREN ZUR HERSTELLUNG DESSELBEN**

(71) Anmelder: ContiTech Deutschland GmbH, 30165 Hannover (DE)
(72) Erfinder: Wichmann, Marc, 30165 Hannover (DE); Kroll, Uta, 30165 Hannover (DE); Harsanyi, Zsolt, 30165 Hannover (DE); Szyszka, Axel, 30165 Hannover (DE)
(74) Vertreter: Continental Corporation

(57) **Zusammenfassung**

Die Erfindung betrifft ein Bauteil, hergestellt in einem Spritzgussverfahren, aufweisend einen Gewindeeinsatz (2) mit einer ersten Öffnung (3) und einer zweiten Öffnung (4), wobei das Bauteil ein polymeres Material umfasst, wobei der Gewindeeinsatz (2) im Wesentlichen in das polymere Material eingebettet ist. Die erste Öffnung (3) und bzw. oder die zweite Öffnung (4) ist durch einen Stöpsel (5) abdichtend verschließbar.

## Beschreibung

Die Erfindung betrifft ein Bauteil, hergestellt in einem Spritzgussverfahren, aufweisend einen Gewindeeinsatz mit einer ersten Öffnung und einer zweiten Öffnung, wobei das Bauteil ein polymeres Material umfasst, wobei der Gewindeeinsatz im Wesentlichen in das polymere Material eingebettet ist.

Die Herstellung von Kunststoffbauteilen im Spritzgussverfahren ist seit langem bekannt. Zur Montage solcher Bauteile an ihrem Bestimmungsort kann das Kunststoffbauteil mit einem Gewinde bzw. einem Gewindeeinsatz aus Metall ausgebildet sein. So können weitere Bauteile mit dem Kunststoffbauteil verschraubt werden.

Als beispielhafte Anwendung kann ein Luftfederkolben aus Kunststoff genannt werden. Der Luftfederkolben kann über das Gewinde mit einem Fahrwerksbauteil eines Fahrzeugs verschraubt werden. An dem Luftfederkolben kann ein Luftfederbalg aus elastomerem Material angebunden sein, wobei die Verbindung zwischen Luftfederbalg und Luftfederkolben druckdicht erfolgen muss, um einen Druckverlust der Luftfeder vermeiden zu können.

Der Gewindeeinsatz ist von dem polymeren Material des Kunststoffbauteils im Wesentlichen umgeben bzw. im Wesentlichen in das polymere Material eingebettet. Der Gewindeeinsatz kann mit der Geometrie des Kunststoffbauteils abschließen oder aus dem Kunststoffbauteil herausragen. In jedem Fall muss sichergestellt werden, dass der umspritzte Gewindeeinsatz in dem Kunststoffbauteil nach außen hin geöffnet ist und auch während des Umspritzens kein polymeres Material in die Gewindegänge des Gewindeeinsatz fließen kann. Nur so kann sichergestellt werden, dass das Kunststoffbauteil unmittelbar nach dem Herstellen ohne weitere Nacharbeit mit anderen Bauteilen verschraubbar ist.

Üblicher Weise ist der Gewindeeinsatz aus Metall mit einem Sackloch, d. h. mit nur einer Öffnung ausgebildet. Zum Schutz des Gewindeeinsatz vor Korrosion wird zumindest das Innengewinde des Gewindeeinsatz mit einem Korrosionsschutz, z. B. aus einer Zink-Nickel Legierung versehen. Hierfür kommen üblicher Weise galvanische Beschichtungsverfahren zum Einsatz, wobei die Schichtdicke des Korrosionsschutzes mit zunehmender Tiefe der Sacklochbohrung abnimmt. Das kann dazu führen, dass ab einer gewissen Tiefe der Sacklochbohrung kein ausreichender Korrosionsschutz möglich ist.

Zur Verbesserung des Korrosionsschutzes des Gewindeeinsatz kann der Gewindeeinsatz eine Durchgangsbohrung aufweisen. Beispielsweise betrifft die EP 3 885 594 A1 ein Spritzgussbauteil mit einem solchen Gewindeeinsatz mit einer Durchgangsbohrung und einer Zink-Nickel-Beschichtung zur Verbesserung der antikorrosiven Eigenschaften. Nachteiliger Weise kann während des Umspritzens des Gewindeeinsatz, polymeres Material durch die Öffnungen des Gewindeeinsatz in die Gewindegänge gelangen, wodurch die Funktion des Gewindeeinsatz beeinträchtigt werden kann. Ein nachträgliches Entfernen des polymeren Materials aus den Gewindegängen ist aufwendig und kann zudem den Korrosionsschutz des Gewindeeinsatz beschädigen.

Die JP2018071775A offenbart einen Gewindeeinsatz mit einer Durchgangsbohrung, welches in einem Spritzgussverfahren umspritzt wird. Um ein Eindringen des umspritzten Materials in das Gewinde zu verhindern, wird während des Umspritzens ein Dorn in die Durchgangsbohrung eingeschoben. Der Dorn ist Teil des Spritzgusswerkzeugs. Um ein Eindringen des polymeren Materials in das Innengewinde des Gewindeeinsatz wirksam verhindern zu können ist es erforderlich, dass der Außendurchmesser des Dorns an dem Innendurchmesser des Innengewindes des Gewindeeinsatz bündig anliegt und die Länge des Dorns auf die Länge des Gewindeeinsatz angepasst ist. Dies erfordert das Einhalten besonders enger Maßtoleranzen. Der Gewindeeinsatz sowie das Spritzgusswerkzeug unterliegen während des Spritzgussverfahrens Temperaturschwankungen von bis zu 150 °C, sodass unterschiedliche Ausdehnungskoeffizienten des Gewindeeinsatz und des Spritzgusswerkzeugs bzw. des Dorns dazu führen können, dass ein abdichtendes Verschließen der Durchgangsbohrung des Gewindeeinsatz durch den Dorn nicht über den gesamten erforderlichen Temperaturbereich während des Spritzgussverfahrens sichergestellt werden kann. Die Auslegung des Spritzgusswerkzeugs ist daher sehr anspruchsvoll und mit hohen Entwicklungskosten verbunden.

Daher liegt der Erfindung die Aufgabe zugrunde, eine einfache und kostengünstige Lösung bereitzustellen, die das Eindringen von polymerem Material in einen Gewindeeinsatz während eines Spritzgussverfahrens wirksam verhindern kann.

Die Lösung dieser Aufgabe ergibt sich durch ein Bauteil mit den Merkmalen des unabhängigen Anspruchs 1. Weitere vorteilhafte Ausbildungen sind in den abhängigen Ansprüchen offenbart. Anspruch 6 offenbart ein Verfahren zur Herstellung des erfindungsgemäßen Bauteils.

Weitere Vorteile und Merkmale sind der allgemeinen Beschreibung sowie den Ausführungsbeispielen zu entnehmen.

Die vorliegende Anmeldung betrifft ein Bauteil, hergestellt in einem Spritzgussverfahren, aufweisend einen Gewindeeinsatz mit einer ersten Öffnung und einer zweiten Öffnung, wobei das Bauteil ein polymeres Material umfasst. Der Gewindeeinsatz ist im Wesentlichen in das polymere Material eingebettet. Die Erfindung ist dadurch gekennzeichnet, dass die erste Öffnung und bzw. oder die zweite Öffnung durch einen Stöpsel abdichtend verschließbar ist.

Der Gewindeeinsatz ist mit einer Durchgangsbohrung und einem Innengewinde versehen. Insbesondere bei Verwendung eines metallischen Werkstoffs des Gewindeeinsatz ist eine Durchgangsbohrung für einen ausreichenden Korrosionsschutz von besonderer Bedeutung.

Der Gewindeeinsatz kann mit der Oberfläche des Bauteils abschließen oder aus dem Bauteil herausragen. In jedem Fall muss sichergestellt werden, dass die erste Öffnung und bzw. oder die zweite Öffnung nach außen hin geöffnet, d. h. nicht von dem polymeren Material verschlossen ist, sodass das Bauteil über den Gewindeeinsatz mit weiteren Bauteilen oder Baugruppen verschraubt werden kann.

Damit während des Umspritzens des Gewindeeinsatz kein polymeres Material in die Gewindegänge des Gewindeeinsatz gelangen kann, kann die erste Öffnung und bzw. oder die zweite Öffnung mit einem Stöpsel abdichtend verschlossen werden. Der Stöpsel kann optional nach dem Umspritzen des Gewindeeinsatz reversibel und zerstörungsfrei von dem Gewindeeinsatz bzw. dem Bauteil gelöst werden, sodass z. B. eine Schraube in den Gewindeeinsatz eingeschraubt werden kann. Der Stöpsel kann beispielsweise aus Kunststoff oder Metall ausgebildet sein. Unter dem Begriff Stöpsel können z. B. Stopfen, Deckel oder Niete in verschiedenen Ausbildungen verstanden werden.

Während des Spritzgussverfahrens weist das polymere Material eine unter erhöhtem Druck und einer erhöhten Temperatur fließfähige Viskosität auf. Um den Gewindeeinsatz gegenüber dem Eindringen von polymerem Material abzudichten, kann der Stöpsel flanschförmig ausgebildet sein und ein zu dem Innengewinde des Gewindeeinsatz komplementäres Außengewinde aufweisen, womit der Stöpsel in das Innengewinde des Gewindeeinsatz einschraubbar ist. Zusätzliche Dichtelemente oder Dichtlippen können die abdichtende Wirkung des Stöpsels verbessern. Die Ausbildung des Stöpsels mit einem Gewinde kann eine reversible Verwendung des Stöpsels, also ein mehrmaliges Verschließen und Öffnen der ersten und bzw. oder zweiten Öffnung des Gewindeeinsatz erleichtern. Alternativ kann der Stöpsel eine Übermaßpassung aufweisen und unter Ausübung leichter Hammerschläge in die erste Öffnung und bzw. oder zweite Öffnung des Gewindeeinsatz eingesetzt werden.

Auf besonders vorteilhafte Weise kann der Gewindeeinsatz mit dem Stöpsel verschlossen werden, ohne dass Änderungen an vorhandenen Spritzgusswerkzeugen erforderlich sind. So lassen sich herkömmliche Gewindeeinsätze durch den erfindungsgemäßen Gewindeeinsatz mit Stöpsel kostengünstig ersetzen.

Gemäß einem weiteren Aspekt der vorliegenden Erfindung ist der Gewindeeinsatz aus Metall ausgebildet. Auf besonders vorteilhafte Weise kann ein Gewindeeinsatz aus Metall besonders robust und langlebig ausgebildet sein. Gegenüber bekannten Lösungen mit einem Dorn zum Verschließen des Gewindeeinsatz als Teil des Spritzgusswerkzeugs kann der Gewindeeinsatz der erfindungsgemäßen Lösung bei Wahl eines geeigneten Stöpsels, z. B. eines aufweitbaren und im Durchmesser veränderlichen Niets, auf vorteilhafte Weise größere Fertigungstoleranzen bzw. Maßtoleranzen aufweisen. So können insbesondere als Kaltfließpressteil kostengünstig hergestellte Gewindeeinsätze verwendet werden.

In einer weiteren vorteilhaften Ausbildung weist der Gewindeeinsatz eine vor Korrosion schützende Beschichtung auf. Die Beschichtung kann eine Zink-Nickel-Beschichtung zur Verbesserung der antikorrosiven Eigenschaften sein. Das erfindungsgemäße Bauteil kann so auch in z. B. feuchten Umgebungsbedingungen dauerhaft eingesetzt werden.

Gemäß einem weiteren Aspekt der vorliegenden Erfindung ist das Bauteil ein Kunststoffkolben für eine Luftfeder. Die zuvor genannten Eigenschaften und Vorteile lassen sich so auf einen Kunststoffkolben für eine Luftfeder übertragen.

Die vorliegende Erfindung betrifft außerdem eine Luftfeder mit einem erfindungsgemäßen Bauteil, insbesondere mit einem erfindungsgemäßen Kunststoffkolben. Die zuvor genannten Eigenschaften und Vorteile lassen sich so auf eine Luftfeder übertragen.

Die vorliegende Erfindung betrifft weiterhin ein Verfahren zur Herstellung eines Bauteils, gekennzeichnet durch die folgenden Verfahrensschritte:
a) Bereitstellen eines Gewindeeinsatz, aufweisend eine erste Öffnung und eine zweite Öffnung,
b) Verschließen der ersten Öffnung und bzw. oder der zweiten Öffnung durch einen Stöpsel,
c) Einlegen des Gewindeeinsatz in ein Spritzgusswerkzeug,
d) Verschließen des Spritzgusswerkzeugs,
e) Umspritzen des Gewindeeinsatzes mit polymerem Material,
f) Öffnen des Spritzgusswerkzeugs,
g) Entnehmen des Bauteils.

Der Gewindeeinsatz ist mit einer Durchgangsbohrung und einem Innengewinde versehen. Insbesondere bei Verwendung eines metallischen Werkstoffs des Gewindeeinsatz ist eine Durchgangsbohrung für einen ausreichenden Korrosionsschutz von besonderer Bedeutung. Der Gewindeeinsatz kann mit der Oberfläche des Bauteils abschließen oder aus dem Bauteil herausragen. In jedem Fall muss sichergestellt werden, dass die erste Öffnung und bzw. oder die zweite Öffnung nach außen hin geöffnet, d. h. nicht von dem polymeren Material verschlossen ist, sodass das Bauteil über den Gewindeeinsatz mit weiteren Bauteilen oder Baugruppen verschraubt werden kann.

Der mit dem Stöpsel zumindest einseitig verschlossene Gewindeeinsatz wird in ein Spritzgusswerkzeug eingelegt. Das Spritzgusswerkzeug wird im darauffolgenden Verfahrensschritt verschlossen.

In dem nächstfolgenden Prozessschritt wird das polymere Material unter Druck und Temperatur plastifiziert bzw. verflüssigt, sodass der Gewindeeinsatz mit dem polymeren Material umspritzt und zumindest teilweise von dem polymeren Material umschlossen bzw. in das polymere Material eingebettet wird. Durch den mit dem Stöpsel abdichtend verschlossenen Gewindeeinsatz wird verhindert, dass während des Umspritzens des Gewindeeinsatz polymeres Material in die Gewindegänge des Gewindeeinsatz gelangen kann.

Nachdem der Spritzgussvorgang beendet ist und das Bauteil in dem geschlossenen Spritzgusswerkzeug abgekühlt bzw. das polymere Material erstarrt ist, wird das Spritzgusswerkzeug geöffnet. Das Bauteil wird aus dem Spritzgusswerkzeug entnommen.

Der Stöpsel kann optional nach dem Umspritzen des Gewindeeinsatz reversibel und zerstörungsfrei von dem Gewindeeinsatz bzw. dem Bauteil gelöst werden, sodass das Bauteil im Bereich des Gewindeeinsatz eine Öffnung aufweist, sodass z. B. eine Schraube in den Gewindeeinsatz eingeschraubt werden kann. Der Stöpsel kann beispielsweise aus Kunststoff oder Metall ausgebildet sein. Unter dem Begriff Stöpsel können z. B. Stopfen, Deckel oder Niete in verschiedenen Ausbildungen verstanden werden.

Um den Gewindeeinsatz gegenüber dem Eindringen von polymerem Material abzudichten, kann der Stöpsel flanschförmig ausgebildet sein und ein zu dem Innengewinde des Gewindeeinsatz komplementäres Außengewinde aufweisen, womit der Stöpsel in das Innengewinde des Gewindeeinsatz einschraubbar ist. Zusätzliche Dichtelemente oder Dichtlippen können die abdichtende Wirkung des Stöpsels verbessern. Die Ausbildung des Stöpsels mit einem Gewinde kann eine reversible Verwendung des Stöpsels, also ein mehrmaliges Verschließen und Öffnen der ersten und bzw. oder zweiten Öffnung des Gewindeeinsatz erleichtern. Alternativ kann der Stöpsel eine Übermaßpassung aufweisen und unter Ausübung leichter Hammerschläge in die erste Öffnung und bzw. oder zweite Öffnung des Gewindeeinsatz eingesetzt werden.

Der mit dem Stöpsel abgedichtete Gewindeeinsatz kann in einem Spritzgusswerkzeug auf besonders vorteilhafte Weise direkt unter dem Einspritzpunkt angeordnet sein. Der Einspritzpunkt ist die Stelle des höchsten Drucks und der höchsten Temperatur im Spritzgussprozess. Um ein Eindringen des polymeren Materials an dem Einspritzpunkt vermeiden zu können, ist die Abdichtung des Gewindeeinsatz von besonders großer Wichtigkeit.

Auf besonders vorteilhafte Weise kann der Gewindeeinsatz mit dem Stöpsel verschlossen werden, ohne dass Änderungen an vorhandenen Spritzgusswerkzeugen erforderlich sind. So lassen sich herkömmliche Gewindeeinsätze durch den erfindungsgemäßen Gewindeeinsatz mit Stöpsel kostengünstig ersetzen.

Gemäß einem weiteren Aspekt des erfindungsgemäßen Verfahrens ist der Gewindeeinsatz aus Metall ausgebildet. Auf besonders vorteilhafte Weise kann ein Gewindeeinsatz aus Metall besonders robust und langlebig ausgebildet sein. Gegenüber bekannten Lösungen mit einem Dorn zum Verschließen des Gewindeeinsatz als Teil des Spritzgusswerkzeugs kann der Gewindeeinsatz der erfindungsgemäßen Lösung bei Wahl eines geeigneten Stöpsels, z. B. eines aufweitbaren und im Durchmesser veränderlichen Niets, auf vorteilhafte Weise größere Fertigungstoleranzen bzw. Maßtoleranzen aufweisen. So können insbesondere als Kaltfließpressteil kostengünstig hergestellte Gewindeeinsätze verwendet werden.

Gemäß einem weiteren Aspekt des erfindungsgemäßen Verfahrens weist der Gewindeeinsatz eine vor Korrosion schützende Beschichtung auf. Die Beschichtung kann eine Zink-Nickel-Beschichtung zur Verbesserung der antikorrosiven Eigenschaften sein. Das erfindungsgemäße Bauteil kann so auch in z. B. feuchten Umgebungsbedingungen dauerhaft eingesetzt werden.

Gemäß einem weiteren Aspekt des erfindungsgemäßen Verfahrens ist das Bauteil ein Kunststoffkolben für eine Luftfeder. Die zuvor genannten Eigenschaften und Vorteile lassen sich so auf einen Kunststoffkolben für eine Luftfeder übertragen.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand des Anspruchs 1 und bzw. oder dem übrigen unabhängigen Anspruch 6 kombinierbar sind.

Ausführungsbeispiele und weitere Vorteile der Erfindung werden nachstehend im Zusammenhang mit den folgenden Figuren schematisch dargestellt und näher erläutert. Darin zeigt:
Fig. 1 eine schematische Darstellung eines Gewindeeinsatz mit einer Durchgangsbohrung gemäß eines ersten Ausführungsbeispiels.
Fig. 2 eine schematische Darstellung des Gewindeeinsatz aus Fig.1 gemäß eines zweiten Ausführungsbeispiels, wobei die erste Öffnung durch einen Stöpsel verschlossen ist.

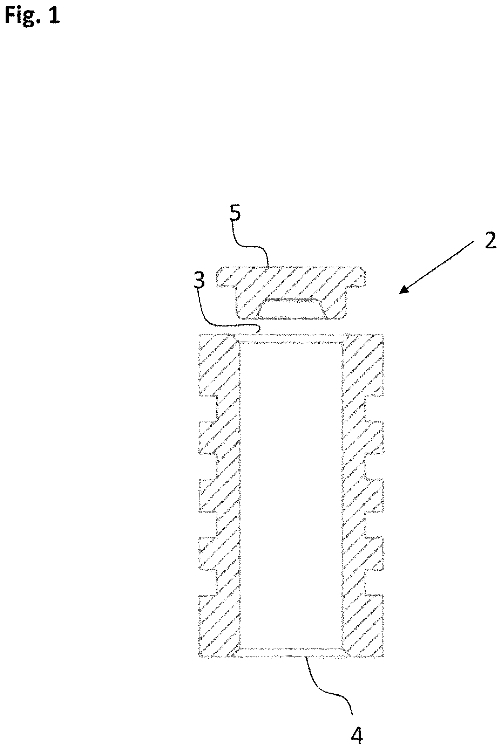

Der in Figur 1 schematisch dargestellte Gewindeeinsatz 2 weist eine erste Öffnung 3 und eine zweite Öffnung 4 auf. Der Gewindeeinsatz 2 ist mit einer Durchgangsbohrung und einem Innengewinde versehen. Insbesondere bei Verwendung eines metallischen Werkstoffs des Gewindeeinsatz 2 ist eine Durchgangsbohrung zum Erlangen eines ausreichenden Korrosionsschutzes in einem galvanischen Beschichtungsverfahren von besonderer Bedeutung. Die erste Öffnung 3 ist durch einen Stöpsel 5 abdichtend verschließbar.

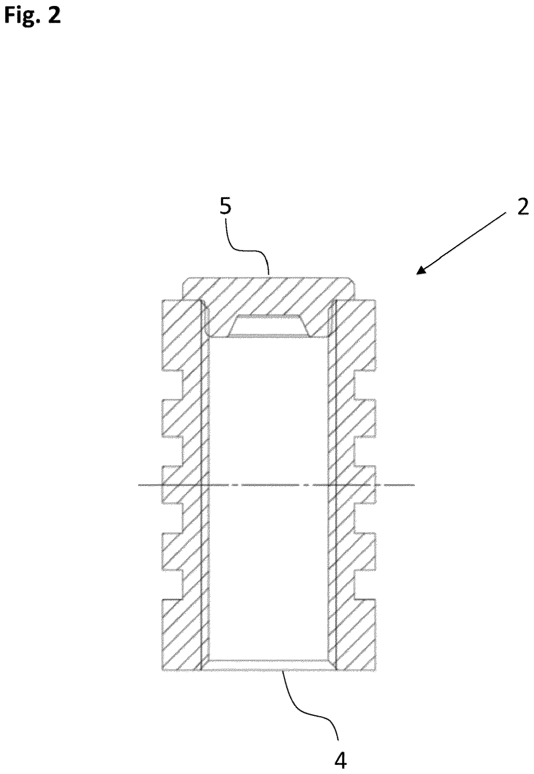

Damit während des Umspritzens des Gewindeeinsatz 2 mit polymerem Material kein polymeres Material in die Gewindegänge des Gewindeeinsatz 2 gelangen kann, ist die erste Öffnung 3 in Figur 2 mit dem Stöpsel 5 abdichtend verschlossen. Der Stöpsel 5 ist in dem dargestellten Beispiel aus Kunststoff ausgebildet. Der Stöpsel 5 weist eine Übermaßpassung auf, sodass der Stöpsel 5 unter Ausübung leichter Hammerschläge in die erste Öffnung 3 des Gewindeeinsatz 2 eingesetzt werden kann und diese abdichtend verschließt.

### Bezugszeichenliste (Teil der Beschreibung)

- 2: Gewindeeinsatz
- 3: Erste Öffnung
- 4: Zweite Öffnung
- 5: Stöpsel

## Patentansprüche

1. Bauteil, hergestellt in einem Spritzgussverfahren, aufweisend einen Gewindeeinsatz (2) mit einer ersten Öffnung (3) und einer zweiten Öffnung (4),
wobei das Bauteil ein polymeres Material umfasst,
wobei der Gewindeeinsatz (2) im Wesentlichen in das polymere Material eingebettet ist,
**dadurch gekennzeichnet, dass**
die erste Öffnung (3) und/oder die zweite Öffnung (4) durch einen Stöpsel (5) abdichtend verschließbar ist.

2. Bauteil nach Anspruch 1,
**dadurch gekennzeichnet, dass**
der Gewindeeinsatz (2) aus Metall ausgebildet ist.

3. Bauteil nach Anspruch 2,
**dadurch gekennzeichnet, dass**
der Gewindeeinsatz (2) eine vor Korrosion schützende Beschichtung aufweist.

4. Bauteil nach einem der vorhergehenden Ansprüche,
**dadurch gekennzeichnet, dass**
das Bauteil ein Kunststoffkolben für eine Luftfeder ist.

5. Luftfeder mit einem Bauteil nach einem der vorhergehenden Ansprüche.

6. Verfahren zur Herstellung eines Bauteils, **gekennzeichnet durch** die folgenden Verfahrensschritte:
a) Bereitstellen eines Gewindeeinsatz (2), aufweisend eine erste Öffnung (3) und eine zweite Öffnung (4),
b) Verschließen der ersten Öffnung (3) und/oder der zweiten Öffnung (4) durch einen Stöpsel (5),
c) Einlegen des Gewindeeinsatz (2) in ein Spritzgusswerkzeug,
d) Verschließen des Spritzgusswerkzeugs,
e) Umspritzen des Gewindeeinsatzes (2) mit polymerem Material,
f) Öffnen des Spritzgusswerkzeugs,
g) Entnehmen des Bauteils.

7. Verfahren nach Anspruch 6,
**dadurch gekennzeichnet, dass**
der Gewindeeinsatz (2) aus Metall ausgebildet ist.

8. Verfahren nach Anspruch 7,
**dadurch gekennzeichnet, dass**
der Gewindeeinsatz (2) eine vor Korrosion schützende Beschichtung aufweist.

9. Verfahren nach einem der Ansprüche 6 bis 8,
**dadurch gekennzeichnet, dass**
das Bauteil ein Kunststoffkolben für eine Luftfeder ist.
